# EUROPEAN PATENT APPLICATION

(11) **EP 2 246 578 A1**
(43) Date of publication of application: **03.11.2010**
(21) Application number: 09252886.8
(22) Date of filing: 22.12.2009
(51) Int. Cl.: F16B 43/02

(54) **Intermediate connector member**

(30) Priority: 22.12.2008 DE 202008017215 U; 25.11.2009 GB 0920716
(71) Applicant: Simpson Strong-Tie Company, Inc., Pleasanton, CA 94588 (US)
(72) Inventor: Richter, Frank Harald, 60314, Frankfurt (DE)
(74) Representative: Hicks, Paul Edward

(57) **Abstract**

The present invention relates to an intermediate connector member for an oblique screw connection and an oblique screw connection formed therewith between a support part and a fitting part. In particular, the intermediate connector member (10) has a base member (11) comprising a support flange (16), which extends along a periphery of the base member (11) and has a plantar support face (18), and a fitting face (20) arranged at an angle from the support face (18), wherein a fastening opening (12) which is intended to receive a screw fastening member (4) and is arranged at an angle of between 20° and 80°, in particular between 30° and 60°, and in particular of less than 45°, from the support face (18) extends through the base member (11) and through a fitting projection (22) enclosed by the fitting face (20).

## Description

The present invention relates to an intermediate connector member for an oblique screw connection and an oblique screw connection formed therewith between a support part and a fitting part which rests flat against a mounting face of the support part and is connected thereto.

When fastening fitting parts such as wood connectors to beams it is often advantageous for one or more fastening screws to be screwed obliquely rather than perpendicular to a mounting face of the respective support. However, this frequently leads to problems in the transition region between the head of the fastening screw and the fitting part.

The object of the invention is to provide an intermediate connector member for an oblique screw connection and an oblique screw connection provided therewith which addresses problems of this type.

According to the present invention, there is provided an intermediate connector member for an oblique screw connection having a base member comprising a support flange, which extends along a periphery of the base member and has a planar support face, and a fitting face arranged at an angle from the support face, a fitting opening which is intended to receive a screw fastening member and is arranged at an angle of between 20° and 80°, in particular of between 30° and 60°, and in particular of less than 45°, from the support face extending through the base member and through a region enclosed by the fitting face.

The periphery of the base member may be circular, oval, polygonal or freely formed in any desired manner, but a circular shape is preferred.

The support flange preferably extends over the entire periphery.

The fitting face is expediently arranged perpendicular to the support face.

The fitting face preferably surrounds a fitting projection which has a height from the support face. In a specific application, this height corresponds approximately to the width of the fitting part to be fastened.

The fitting opening may comprise a contact or receiving region for a screw head or the like at an end remote from the region enclosed by the fitting face- The contact region may be flat The receiving region may be conical or cylindrical.

The fitting projection expediently has a planar lower side which is parallel to the support face.

The base member preferably has a planar upper side which is parallel to the lower side.

The base member may have a cylindrical outer surface, the contact or receiving region being arranged so as to be sunk-in in relation thereto. A screw head of the screw fastening member therefore does not project or only projects marginally over the cylindrical outer surface in the fitted state.

The invention further provides that the fitting face is circular and the fitting opening has a diameter which is between 20 % and 60 %, in particular between 30 % and 50 %, of the diameter of the fitting face.

Furthermore, the fitting face is preferably circular and has a diameter which is between 50 % and 95 % of an outer diameter of the support face.

The intermediate connector member may be composed of rigid plastics material, light metal or steel.

The present invention also provides an oblique screw connection between a support part and a fitting part which rests flat against a mounting face of the support part and is connected thereto, comprising an intermediate connector member according to the invention, the fitting part comprising a fitting opening in which the fitting face of the intermediate connector member is received, a screw fastening member extending obliquely to the fastening part and the mounting face and through the fitting opening of the intermediate connector member into the support part.

The support part may consist of wood and the fastening part may consist of sheet steel.

Further advantages and features of the invention will emerge from the following description. Preferred embodiments of the present invention will now be described by way of example only with reference to the accompanying drawings, in which:

Fig. 1 is a sectional view of an oblique screw connection according to the invention, and

Fig. 2 is a plan view of an intermediate connector member according to the invention for an oblique screw connection.

A fitting part 6 is fastened to a support part 2, in this case a wooden beam, by a fastening screw 4. The fitting part 6 rests flat against a mounting face 2a of the support part 2, and the fastening screw 4 is positioned at an angle a of 45° from this mounting face 2a.

In order to form a positive and fictional connection between the fastening screw 4 and the fitting part, the fitting part 6 is provided with a fitting opening 8 which is relatively large in comparison with the diameter D of the fastening screw 4 and through which the fastening screw 4 extends obliquely. Inserted into the fitting opening 8 is an intermediate member 10 according to the invention which has an obliquely arranged fitting opening 12 through which the fastening screw 4 extends.

In this example, the intermediate connector member 10 is formed so as to be cylindrical and has a base member 11 comprising a cylindrical outer surface 14 and a support flange 16 which extends over the periphery. The support flange 16 has a planar, annular support face 18, with which the intermediate connector member 10 rests on the fitting part 6, and a fitting face 20 which extends perpendicular thereto, faces the inner face of the fitting opening 8 of the fitting part 6 and cooperates positively therewith. For ease of fitting there is a slight clearance between the fitting face 20 and the fitting opening 8 so the intermediate connector member 10 can be introduced readily into the fitting opening 8.

The fitting face 20 surrounds a cylindrical region or fitting projection 22 of the intermediate connector member 10, the fitting projection 22 projecting into the fitting opening 8 of the fitting part 6 and having a height h, measured from the plane of the support face 18. The dimension h must be smaller than or at most equal to the width d of the fitting part 6 to ensure that the intermediate connector member 10 does not strike the mounting face 2a.

In the example shown, the projecting region 22 has a planar lower side 24 which is parallel to the plane of the support face 18. Furthermore, the intermediate connector member 10 has a planar upper side 26 which is parallel to the lower side 24 and also parallel to the plane of the support face 18.

In the example shown, the intermediate connector member 10 has an outer diameter of 30 mm, the fitting face 20 has a diameter of 20 mm, the distance between the upper side 26 and the support face 18 is 12 mm and the height h is approximately 3 to 4 mm, whereas the thickness d of the fitting part is approximately 6 mm.

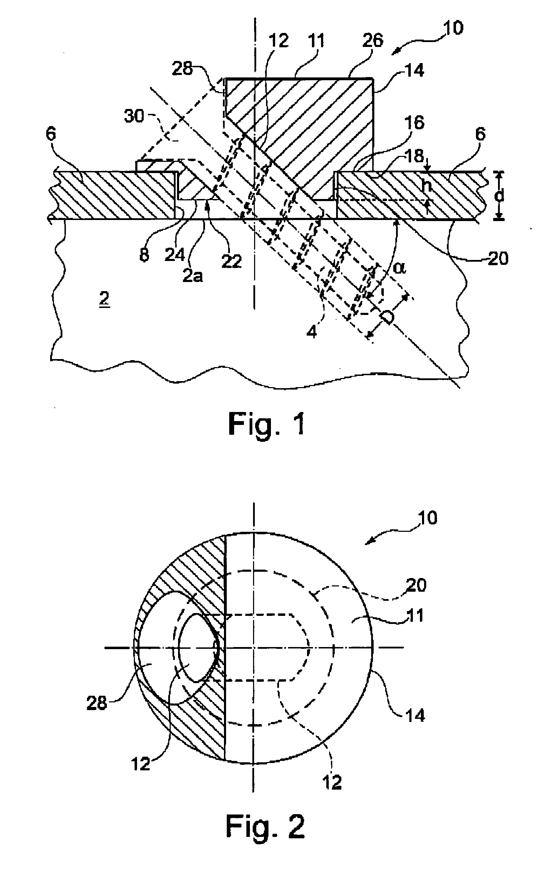

As shown by Fig. 1 and Fig. 2, the intermediate connector member 10 is provided with a widened receiving region 28 at an end of the fitting opening 12 remote from the fitting face 20 in order to receive the head 30 of the fastening screw 4. In the example shown, both the head 30 and the receiving region 28 are conical with a cone half-angle of 45° so the head 30 rests in the receiving region 28 with a positive fit. Alternatively, it would also be possible to provide the base member only with a flattened portion which extends perpendicular to the longitudinal axis of the fastening screw 4 if said screw has a head with a planar lower side.

When screwing in the fastening screw 4, the support face 18 of the intermediate connector member 10 is brought to rest from above onto the fitting part 6, while said intermediate connector member is held in the desired position by the fitting face 20 without the fastening screw 4 coming into direct contact with the fitting part 6.

Each feature disclosed in this specification (including the accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features. In addition, all of the features disclosed in this specification (including the accompanying claims, abstract and drawings), and/or all of the steps of any method or process so disclosed, may be combined in any combination, except combinations where at least some of such features and/or steps are mutually exclusive. Accordingly, while different embodiments of the present invention have been described above, any one or more or all of the features described, illustrated and/or claimed in the appended claims may be used in isolation or in various combinations in any embodiment. As such, any one or more feature may be removed, substituted and/or added to any of the feature combinations described, illustrated and/or claimed. For the avoidance of doubt, any one or more of the features of any embodiment may be combined and/or used separately in a different embodiment with any other feature or features from any of the embodiments.

Whilst preferred embodiments of the present invention have been described above and illustrated in the drawings, these are by way of example only and non-limiting. It will be appreciated by those skilled in the art that many alternatives are possible within the ambit of the invention. As such, the true scope of the invention is that as set out in the appended claims.

The following clauses describe further preferred aspects of the present invention:
1. An intermediate connector member (10) for an oblique screw connection, having a base member (11) comprising a support flange (16), which extends along a periphery of the base member (11) and has a planar support face (18), and a fitting face (20) arranged at an angle from the support face (18), wherein a fastening opening (12) which is intended to receive a screw fastening member (4) and is arranged at an angle in the range of substantially 20° to 80°, more preferably in the range of substantially 30° to 60°, or at an angle less than substantially 45°, or of substantially 45° from the support face (18), extends through the base member (11) and through a region (22) enclosed by the fitting face (20).
2. An intermediate connector member according to clause 1, **characterised in that** the periphery of the base member (11) is circular, oval, polygonal or freely formed.
3. An intermediate connector member according to either clause 1 or clause 2. **characterised in that** the periphery of the support flange (16) is circular, oval, polygonal or freely formed.
4. An intermediate connector member according to any one of the preceding clauses, **characterised in that** the support flange (16) extends over the entire periphery.
5. An intermediate connector member according to any one of the preceding clauses, **characterised in that** the fitting face (20) is perpendicular to the support face (18).
6. An intermediate connector member according to any one of the preceding clauses, **characterised in that** the fitting face (20) surrounds a fitting projection (22) which has a height (h) from the support face (18).
7. An intermediate connector member according to any one of the preceding clauses, **characterised in that** the fastening opening (12) comprises a contact or receiving region (28) for a screw head (30) at an end remote from the region (22) enclosed by the fitting face (20).
8. An intermediate connector member according to clause 7, **characterised in that** the contact region is flat.
9. An intermediate connector member according to clause 7, **characterised in that** the receiving region (28) is conical or cylindrical.
10. An intermediate connector member according to any one of clauses 6 to 9, **characterised in that** the fitting projection (22) has a planar lower side (24) which is parallel to the support face (18).
11. An intermediate connector member according to any one of the preceding clauses, **characterised in that** the base member (11) has a planar upper side (26) which is parallel to the lower side (24).
12. An intermediate connector member according to any one of the preceding clauses, **characterised in that** the base member (11) has a cylindrical outer surface (14), the contact or receiving region (28) being arranged so as to be sunk-in in relation thereto.
13. An intermediate connector member according to any one of the preceding clauses, **characterised in that** the fitting face (20) is circular and the fastening opening (12) has a diameter which is preferably in the range of substantially 20 to 60 %, more preferably in the range of substantially 30 to 50 %, of the diameter of the fitting face (20).
14. An intermediate connector member according to any one of the preceding clauses, **characterised in that** the fitting face (20) is circular and has a diameter which is preferably in the range of substantially 50 to 95 % of an outer diameter of the support face (18).
15. An intermediate connector member according to any one of the preceding clauses, **characterised in that** it is composed of a rigid plastics material, light metal or steel.
16. An oblique screw connection between a support part (2) and a fitting part (6) which rests flat against a mounting face (2a) of the support part and is connected thereto, comprising an intermediate connector member (10) according to any one of the preceding claims, wherein the fitting part (6) comprises a fitting opening (8) in which the fitting face (20) of the intermediate member (10) is received, a screw fastening member (4) extending obliquely to the fitting part (6) and the mounting face (2a) and through the fastening opening (8) of the intermediate member (10) into the support part (2).
17. An oblique screw connection according to clause 15, **characterised in that** the support part consists of wood.
18. An oblique screw connection according to either clause 16 or clause 17, **characterised in that** the fitting part (6) consists of sheet steel.
19. An intermediate connector member substantially as hereinbefore described with reference to or as shown in the accompanying drawings.
20. An oblique screw connection substantially as hereinbefore described with reference to or as shown in the accompanying drawings.

## Claims

1. An intermediate connector member (10) for an oblique screw connection, having a base member (11) comprising a support flange (16), which extends along a periphery of the base member (11) and has a planar support face (18), and a fitting face (20) arranged at an angle from the support face (18), wherein a fastening opening (12) which is intended to receive a screw fastening member (4) and is arranged at an angle of between 20° and 80°, in particular between 30° and 60°, and in particular of less than 45°, from the support face (18) extends through the base member (11) and through a region (22) enclosed by the fitting face (20).

2. An intermediate connector member according to claim 1, **characterised in that** the periphery of the base member (11) is circular, oval, polygonal or freely formed.

3. An intermediate connector member according to either claim 1 or claim 2, **characterised in that** the periphery of the support flange (16) is circular, oval, polygonal or freely formed.

4. An intermediate connector member according to any one of the preceding claims, **characterised in that** the support flange (16) extends over the entire periphery.

5. An intermediate connector member according to any one of the preceding claims, **characterised in that** the fitting face (20) is perpendicular to the support face (18).

6. An intermediate connector member according to any one of the preceding claims, **characterised in that** the fitting face (20) surrounds a fitting projection (22) which has a height (h) from the support face (18).

7. An intermediate connector member according to any one of the preceding claims, **characterised in that** the fastening opening (12) comprises a contact or receiving region (28) for a screw head (30) at an end remote from the region (22) enclosed by the fitting face (20).

8. An intermediate connector member according to claim 7, **characterised in that** the contact region is flat.

9. An intermediate connector member according to claim 7, **characterised in that** the receiving region (28) is conical or cylindrical.

10. An intermediate connector member according to any one of claims 6 to 9, **characterised in that** the fitting projection (22) has a planar lower side (24) which is parallel to the support face (18).

11. An intermediate connector member according to any one of the preceding claims, **characterised in that** the base member (11) has a planar upper side (26) which is parallel to the lower side (24).

12. An intermediate connector member according to any one of the preceding claims, **characterised in that** the base member (11) has a cylindrical outer surface (14), the contact or receiving region (28) being arranged so as to be sunk-in in relation thereto.

13. An intermediate connector member according to any one of the preceding claims, **characterised in that** the fitting face (20) is circular and the fastening opening (12) has a diameter which is between 20 and 60 %, in particular between 30 and 50 %, of the diameter of the fitting face (20).

14. An intermediate connector member according to any one of the preceding claims, **characterised in that** the fitting face (20) is circular and has a diameter which is between 50 and 95 % of an outer diameter of the support face (18).

15. An intermediate connector member according to any one of the preceding claims, **characterised in that** it is composed of a rigid plastics material, light metal or steel.

16. An oblique screw connection between a support part (2) and a fitting part (6) which rests flat against a mounting face (2a) of the support part and is connected thereto, comprising an intermediate connector member (10) according to any one of the preceding claims, wherein the fitting part (6) comprises a fitting opening (8) in which the fitting face (20) of the intermediate member (10) is received, a screw fastening member (4) extending obliquely to the fitting part (6) and the mounting face (2a) and through the fastening opening (8) of the intermediate member (10) into the support part (2).

17. An oblique screw connection according to claim 15, **characterised in that** the support part consists of wood.

18. An oblique screw connection according to either claim 16 or claim 17, **characterised in that** the fitting part (6) consists of sheet steel.

19. An intermediate connector member substantially as hereinbefore described with reference to or as shown in the accompanying drawings.

20. An oblique screw connection substantially as hereinbefore described with reference to or as shown in the accompanying drawings.
